# EUROPEAN PATENT SPECIFICATION

(11) **EP 3 533 568 B1**
(45) Date of publication and mention of the grant of the patent: **23.09.2020**
(21) Application number: 18212553.4
(22) Date of filing: 14.12.2018
(51) Int. Cl.: B25J 13/08, B25J 19/06, B25J 19/02, B25J 9/00, B25J 13/02, B25J 9/16, G05B 19/423

(54) **ROBOT SYSTEM**
ROBOTERSYSTEM
SYSTÈME DE ROBOT

(30) Priority: 02.03.2018 JP 2018037960
(43) Date of publication of application: 04.09.2019
(73) Proprietor: OMRON Corporation, Shiokoji-dori, Shimogyo-Ku Kyoto-shi Kyoto 600-8530 (JP)
(72) Inventor: NING, Xiaoguang, KYOTO, 600-8530 (JP); HIGUCHI, Toshiyuki, KYOTO, 600-8530 (JP)
(74) Representative: 2K Patentanwälte Blasberg Kewitz & Reichel

(56) References cited:
- EP-A1- 0 850 730
- WO-A1-2014/110682
- JP-A- 2004 243 427
- JP-A- 2015 199 174
- US-B1- 9 804 593

## Description

### BACKGROUND

### TECHNICAL FIELD

The disclosure relates to a robot system capable of directly teaching an operation to a movable mechanical part.

### RELATED ART

There is known a technique in which an operator directly teaches an operation in work to a robot system including a movable mechanical part capable of operating to do the work, by applying an operating force to the movable mechanical part. In addition, there is also known a technique of distinguishing between the operating force applied to the movable mechanical part by the operator in the direct teaching work and a force applied to the movable mechanical part when the movable mechanical part collides with the operator during operation. For example, Patent Document 1 discloses an industrial robot using a force applied by the operator during pressing of a lead-through switch as the force in the direct teaching work.

There is also known a technique of monitoring the vicinity of a work area of the movable mechanical part with a sensor in order to improve safety in the robot system.

### [Patent Documents]

Patent Document 1: Japanese Laid-open No. 2015-199174 (published on November 12, 2015)

### SUMMARY

### [Problems to Be Solved]

However, in the disclosure described in Patent Document 1, there is a problem that the lead-through switch has to be continuously pressed during the direct teaching work and workability is not high. In addition, providing the lead-through switch that is only used for teaching work can be a main cause of high cost.

An aspect of the disclosure provides a robot system with improved safety and workability.

### [Means for Solving the Problems]

The disclosure adopts the following configuration.

That is, a robot system according to an aspect of the disclosure includes: a movable machine control part, controlling operation of a movable mechanical part according to a set operating mode; a teaching content registration part, registering teaching content input by a user by applying an operating force to the movable mechanical part; a first sensor, detecting intrusion of an object into a first monitoring area set around the movable mechanical part and contact of the user with the movable mechanical part; and an operating mode switch part, switching the operating mode between a first mode in which the operation of the movable mechanical part is decelerated or stopped when the first sensor detects the intrusion of the object into the first monitoring area and a second mode in which the teaching content can be accepted and executed while the first sensor is detecting the contact of the user with the movable mechanical part.

According to the above configuration, in the robot system, in the case where, for example, the movable mechanical part is operating in the first mode, an impact received by the user entering the first monitoring area in collision with the movable mechanical part can be suppressed and safety can be improved. Furthermore, in the robot system, in the case where the movable mechanical part is standing by in the second mode, the teaching content input by the user in contact with the movable mechanical part can be registered. Accordingly, in the case of registering the teaching content, the user's operation such as a button operation or the like is not required, and workability in the teaching work is improved. Therefore, an effect is achieved that a robot system with improved safety and workability can be provided.

In the robot system according to the previous aspect, the first sensor may be a capacitive sensor. According to this configuration, the intrusion of the object into the first monitoring area is detected by the capacitive sensor. Since the capacitive sensor is capable of monitoring an area in the vicinity of an installation location without missing any blind spots, by installing the capacitive sensor in the vicinity of the movable mechanical part, the intrusion of the object into the first monitoring area can be accurately detected. Thus, safe detection in the first mode and reception of the teaching work in the second mode can be properly performed.

In the robot system according to the previous aspect, a second sensor is further included which detects intrusion of an object into a second monitoring area including an area farther from the movable mechanical part than the first monitoring area. In the first mode, when the first sensor detects the intrusion of the object into the first monitoring area or when the second sensor detects the intrusion of the object into the second monitoring area, the movable machine control part decelerates or stops the operation of the movable mechanical part; in the second mode, the detection of intrusion of an object into the second monitoring area by the second sensor is invalidated, and while the first sensor is detecting the contact of the user with the movable mechanical part, the teaching content registration part may be in a state capable of accepting and executing the teaching content. According to this configuration, in the first mode, since the detection of intrusion of an object is performed in both the first monitoring area and the second monitoring area, safe monitoring in a wide range can be performed. In addition, in the second mode, the second monitoring area far from the movable mechanical part is set invalid, and by the first monitoring area close to the movable mechanical part, the teaching content can be accepted and executed. That is, in the second mode, it is possible to prevent a state in which the teaching content is accepted and executed more than necessary.

In the robot system according to the previous aspect, the first sensor and the second sensor may be sensors operating with different detection methods from each other. According to this configuration, sensors operating with different detection methods from each other are used by means of the first sensor and the second sensor. Thus, a sensor having a detection method suitable for detecting the first monitoring area can be used as the first sensor, and a sensor having a detection method suitable for detecting the second monitoring area can be used as the second sensor.

### [Effects]

According to an aspect of the disclosure, a robot system with improved safety and workability can be provided.

### BRIEF DESCRIPTION OF THE DRAWINGS

FIG. 1 is a block diagram showing an example of a configuration of principal parts of a robot system according to a first embodiment of the disclosure.
FIG. 2 is a schematic diagram showing an example of a situation in which the robot system according to an application example of the disclosure is applied.
FIG. 3A to FIG. 3C are schematic diagrams showing outlines of operating modes in the robot system according to the first embodiment of the disclosure, wherein FIG. 3A shows the outline of a first mode, FIG. 3B shows the outline of a second mode, and FIG. 3C shows operations of a first sensor and a second sensor in each operating mode.
FIG. 4A to FIG. 4B are schematic diagrams showing a difference between areas monitored by various sensors, wherein FIG. 4A shows a second monitoring area monitored by the second sensor, and FIG. 4B shows, in addition to that shown in FIG. 4A, a first monitoring area monitored by the first sensor.

### DESCRIPTION OF THE EMBODIMENTS

### §1 Application Example

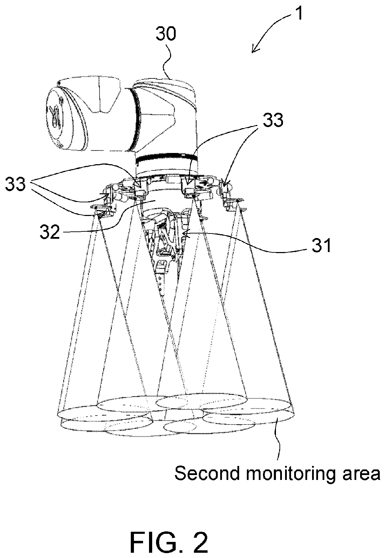

First of all, an example of a situation in which the disclosure is applied is explained using FIG. 2. FIG. 2 schematically illustrates an example of a situation in which a robot system 1 according to the present embodiment is applied. The robot system 1 according to the present embodiment is a system that operates a movable mechanical part 30 to carry out various work.

As shown in FIG. 2, the robot system 1 includes the movable mechanical part 30. In the movable mechanical part 30, a tool 31, a first sensor 32 and a plurality of second sensors 33 are arranged. The tool 31 is an instrument fixed to an end part of the movable mechanical part 30, and the robot system 1 uses the tool 31 to carry out various work such as holding or processing a material. In the following explanation, an area where the robot system 1 uses the tool 31 to carry out the various work is referred to as a work area. That is, the work area is set around the tool 31. The tool 31 has, for example, a shape of a robot hand, and is capable of holding a work object (workpiece). The tool 31 may be configured having a dangerous portion such as a sharp protrusion or may be configured having no dangerous portion. The tool 31 may be configured replaceable according to the purpose of the work.

The first sensor 32 is arranged in the vicinity of the tool 31 and monitors presence or absence of intrusion of an object into a first monitoring area set around the movable mechanical part 30 and presence or absence of contact of a user with the movable mechanical part 30. The second sensors 33 monitor presence or absence of intrusion of an object into a second monitoring area at least including the work area of the movable mechanical part 30 and the vicinity of the work area. The second monitoring area is set to include an area farther from the movable mechanical part 30 than the first monitoring area.

The robot system 1 is capable of switching between at least two operating modes. A first mode is an operating mode in which the movable mechanical part 30 is operated so that the user or the like does not collide with the movable mechanical part 30 and the tool 31. In the first mode, when the intrusion of the object into at least one of the first monitoring area and the second monitoring area is detected, the operation of the movable mechanical part 30 is decelerated or stopped. The second mode is a teaching mode of teaching the operation of the movable mechanical part 30 to the robot system 1. In the second mode, the robot system 1 keeps the movable mechanical part 30 on standby in a stop state of being held or braked in the same position. Then, while the first sensor 32 is detecting that the user has contacted the movable mechanical part 30, the user performs direct teaching of an operation by applying an operating force to the movable mechanical part 30. The robot system 1 is capable of registering the content of the direct teaching input during standby in the second mode and reproducing the teaching content.

The robot system 1 is capable of appropriately switching between the first mode and the second mode. A method for switching the operating mode may be any method as long as it can be performed independently from the teaching work. For example, a method may be used in which a panel operation or the like is set as a predetermined condition, and the operating mode is switched when the predetermined condition is satisfied.

When operating in the first mode, the robot system 1 is capable of suppressing an impact received by the user in collision with the movable mechanical part 30 and improving safety. Furthermore, during standby of the robot system 1 in the second mode, the teaching content input by the user in contact with the movable mechanical part 30 can be registered. Since the start and end of the direct teaching performed by the user are detected based on the presence or absence of the detection performed by the first sensor 32, a button operation or the like performed by the user is not required, and workability in the direct teaching can be improved. Therefore, the robot system 1 with improved safety and workability can be provided.

### §2 Configuration Example

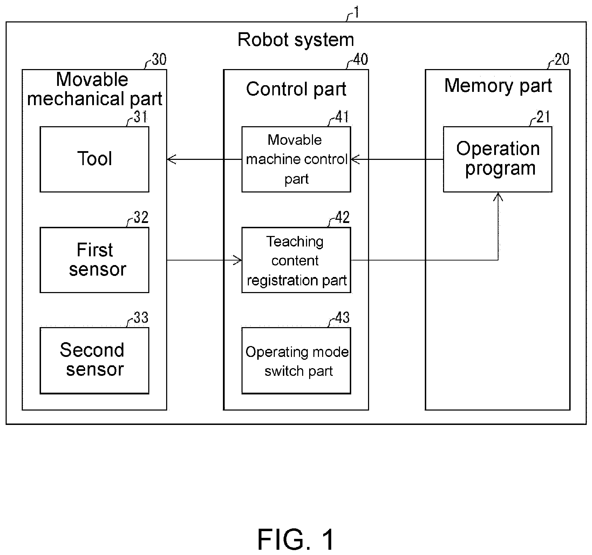

Hereinafter, an embodiment of the disclosure is explained in detail using FIG. 1, FIG. 3A to FIG. 3C, and FIG. 4A to FIG. 4B.

### (Configuration of Robot System)

The outline and configuration of the robot system 1 according to an aspect of the disclosure are explained using FIG. 1. FIG. 1 is a block diagram showing an example of a configuration of principal parts of the robot system 1. The robot system 1 includes a memory part 20, the movable mechanical part 30 and a control part 40. The memory part 20 includes an operation program 21, and the movable mechanical part 30 includes the tool 31, the first sensor 32 and the second sensor 33. The control part 40 includes a movable machine control part 41, a teaching content registration part 42, and an operating mode switch part 43.

The robot system 1 is capable of operating the movable mechanical part 30 according to an instruction from the control part 40. The robot system 1 is, for example, an industrial robot carrying out manufacturing work or the like by operating the movable mechanical part 30 according to the operation program 21.

The memory part 20 is capable of holding various data handled by the robot system 1. In the illustrated example, the memory part 20 at least includes the operation program 21. The operation program 21 is a program in which processing necessary for the operation of the robot system 1 is described. The operation program 21 is read by the control part 40, and the control part 40 is capable of operating each part according to the described content. In the operation program 21, the content of the direct teaching performed to the movable mechanical part 30 and accepted by the teaching content registration part 42 can be registered.

The movable mechanical part 30 is a portion of the robot system 1 used for work. The movable mechanical part 30 may be, for example, a flexible arm including a plurality of joint parts. The movable mechanical part 30 is capable of operating under control from the movable machine control part 41.

The tool 31 is an instrument attached to the end part of the movable mechanical part 30 for carrying out various work.

The first sensor 32 detects intrusion of an object into the first monitoring area set around the movable mechanical part 30 and contact of the user with the movable mechanical part 30. In FIG. 1, the first sensor 32 is configured to be included in the movable mechanical part 30. However, the first sensor 32 may be, for example, in an arbitrary position in the robot system 1 as long as it is capable of monitoring the first monitoring area. The first sensor 32 can be a sensor capable of detecting intrusion of an object in a noncontact manner. For example, a capacitive sensor capable of detecting intrusion of an object in a noncontact manner from a change in electrostatic capacity and also capable of detecting contact of the user with the movable mechanical part 30 can be used as the first sensor 32.

The second sensor 33 detects intrusion of an object into the second monitoring area at least including the work area of the movable mechanical part 30 and the vicinity of the work area. The second sensor 33 can be, for example, an optical ranging module. However, any kind of sensor may be used as the second sensor 33 as long as it is capable of detecting intrusion of an object into the second monitoring area.

The optical ranging module is a device measuring a distance to the detected object based on the time-of-flight (ToF) principle, in which the detected object is irradiated with light from a light emitting element, the reflected light is read by a light receiving element, and distance calculation is performed.

The control part 40 collectively controls each part of the robot system 1. The control part 40 is capable of instructing the movable machine control part 41 to operate the movable mechanical part 30 according to the operation program 21. The control part 40 is capable of determining whether or not the first sensor 32 has detected intrusion of an object into the first monitoring area. In addition, the control part 40 is capable of determining whether or not the second sensor 33 has detected intrusion of an object into the second monitoring area.

The movable machine control part 41 controls the operation of the movable mechanical part 30 according to a set operating mode. Specifically, the movable machine control part 41 acquires a program relating to the operation of the movable mechanical part 30 from the operation program 21 according to the instruction from the control part 40, and uses the acquired program to operate the movable mechanical part 30 in either the first mode or the second mode. When the first sensor 32 detects the intrusion of the object into the first monitoring area during operation of the movable mechanical part 30 in the first mode, the movable machine control part 41 decelerates or stops the operation of the movable mechanical part 30. While the first sensor 32 is detecting the contact of the user with the movable mechanical part 30 during standby of the movable mechanical part 30 in the second mode, the movable machine control part 41 sends to the teaching content registration part 42 data relating to the operation performed by the operating force applied to the movable mechanical part 30.

The teaching content registration part 42 registers the teaching content input by the user by applying the operating force to the movable mechanical part 30. Specifically, the teaching content registration part 42 receives, from the movable machine control part 41, the data relating to the operation input by direct teaching, generates an operation program for reproducing the teaching content based on the received data, and registers it in the operation program 21.

The operating mode switch part 43 switches the operating mode of the movable mechanical part 30 between the first mode and the second mode. The operating mode may also be switched, for example, in the following case, i.e., when a third sensor different from the first sensor 32 and the second sensor 33 is provided and the third sensor detects content corresponding to an operating mode switching instruction. In addition, the operating mode switch part 43 may switch the operating mode based on an instruction from, for example, an operation panel (not shown) or a programmable logic controller (PLC) (not shown) or the like included in the robot system 1.

### (Difference Depending on Operating Mode)

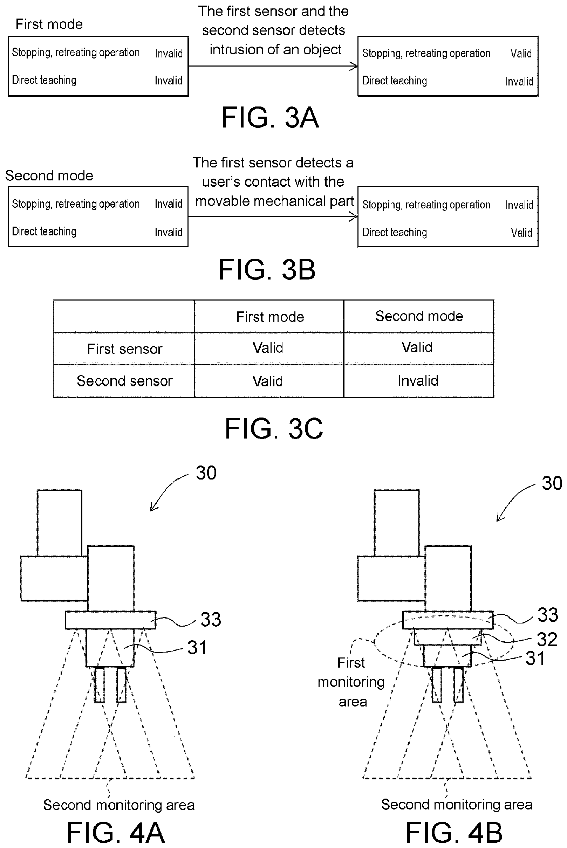

Among operations of the robot system 1 according to the present embodiment, a difference depending on the operating mode is explained using FIG. 3A to FIG. 3C. FIG. 3A to FIG. 3C are schematic diagrams showing outlines of the operating modes in the robot system 1, wherein FIG. 3A shows the outline of the first mode and FIG. 3B shows the outline of the second mode. FIG. 3C is a table showing a combination of operations of the first sensor 32 and the second sensor 33 in each operating mode.

In the illustrated example, "stopping or retreating operation" indicates whether or not to decelerate or stop the operation of the movable mechanical part 30 to avoid collision with an object or the like. "Direct teaching" indicates whether the robot system 1 accepts or does not accept the operation performed by the operating force as the content of direct teaching in the case where the operating force is applied to the movable mechanical part 30.

According to FIG. 3A, in the case where the movable mechanical part 30 is operating in the first mode, the first sensor 32 does not detect any intrusion of an object into the first monitoring area and the second sensor 33 does not detect any intrusion of an object into the second monitoring area, "stopping or retreating operation" is invalid. At this moment, the movable mechanical part 30 operates according to the content of the operation program 21 without considering collision with an object or the like. In addition, "direct teaching" becomes invalid. For example, even if the user applies an operating force to the movable mechanical part 30 without entering the first monitoring area and the second monitoring area, the operation performed by the operating force is not accepted as the teaching content.

After that, when the intrusion of the object into either the first monitoring area or the second monitoring area is detected, "stopping or retreating operation" becomes valid, and the movable mechanical part 30 decelerates or stops its operation to avoid colliding with the object or the like. Moreover, in the first mode, "direct teaching" becomes invalid regardless of whether or not any intrusion of an object into the first monitoring area is detected. In this way, in the case where the movable mechanical part 30 is operating in the first mode, while no intrusion of an object into the first monitoring area and the second monitoring area is being detected, the robot system 1 operates the movable mechanical part 30 according to the content of the operation program 21. When intrusion of an object is detected, the robot system 1 decelerates or stops the operation of the movable mechanical part 30.

According to FIG. 3B, in the case where the movable mechanical part 30 is standing by in the second mode and the first sensor 32 does not detect any contact of the user with the movable mechanical part 30, "stopping or retreating operation" and "direct teaching" both become invalid. Moreover, in the second mode, no detection is performed by the second sensor 33, and the first sensor 32 only detects the presence or absence of contact of the user with the movable mechanical part 30. At this moment, the movable mechanical part 30 is standing by in the stop state of being held or braked in the same position. In addition, even if an operating force is applied to the movable mechanical part 30, the operation performed by the operating force is not accepted as the teaching content.

After that, when the first sensor 32 detects the contact of the user with the movable mechanical part 30, although "stopping or retreating operation" remains invalid, "direct teaching" changes from being invalid to being valid. At this moment, when the user applies an operating force to the movable mechanical part 30, the robot system 1 accepts the operation performed by the operating force applied to the movable mechanical part 30 as the teaching content.

FIG. 3C shows a combination of operations of the first sensor 32 and the second sensor 33 in each operating mode. As described above, while the movable mechanical part 30 is operating in the first mode, the operations of both the first sensor 32 and the second sensor 33 are valid. That is, the control part 40 performs both detection of intrusion of an object into the first monitoring area by the first sensor 32 and detection of intrusion of an object into the second monitoring area by the second sensor 33. On the other hand, while the movable mechanical part 30 is standing by in the second mode, although the operation of the first sensor 32 is valid, the operation of the second sensor 33 is invalidated. That is, although the control part 40 performs the detection of contact of the user with the movable mechanical part 30 by the first sensor 32, it does not perform the detection of intrusion of an object into the second monitoring area by the second sensor 33. In other words, in the second mode, the detection of contact of the user with the movable mechanical part 30 performed by the first sensor 32 is not used for avoiding collision between the movable mechanical part 30 and the user but for detecting the start and end of the teaching work.

As described above, in the robot system 1, while the movable mechanical part 30 is operated in the first mode, collision with an object or the like is avoided using the first monitoring area and the second monitoring area. Furthermore, while the movable mechanical part 30 is kept on standby in the second mode, direct teaching can be accepted based on the presence or absence of contact of the user with the movable mechanical part 30.

### (Arrangement Relationship between First Monitoring Area and Second Monitoring Area)

In the robot system 1 according to the present embodiment, an arrangement relationship between the first monitoring area monitored by the first sensor 32 and the second monitoring area monitored by the second sensor 33 is explained using FIG. 4A to FIG. 4B. FIG. 4A to FIG. 4B are schematic diagrams showing a difference between areas monitored by various sensors, wherein FIG. 4A shows the second monitoring area monitored by the second sensor 33, and FIG. 4B shows superimposition of the first monitoring area monitored by the first sensor 32 onto FIG. 4A. Although the example is shown in which the second sensor 33 is a photoelectric sensor, other type of sensor may also be used.

In the example of FIG. 4A, similarly to FIG. 2, the tool 31 is arranged at the end part of the movable mechanical part 30, and a plurality of the second sensors 33 are arranged between the movable mechanical part 30 and the tool 31. The second monitoring area monitored by each of the second sensors 33 is set to have a conical shape with the sensor at the apex, and a plurality of the second monitoring areas set by the second sensors 33 partially overlap. As shown in FIG. 4A, since the second monitoring area is set to include the vicinity of a tip of the tool 31, in the case where, for example, the tool 31 is configured having a dangerous portion, it can be detected by the second monitoring area whether or not an object or the like approaches the dangerous portion. However, since the second monitoring area is set to have a conical shape with the sensor at the apex, as shown in FIG. 4A, a blind spot occurs in an area in the vicinity of an installation location of the second sensor 33. Specifically, a part of the tool 31 corresponds to a blind spot that is not included in any of the second monitoring areas. Here, for example, in the case where the dangerous portion of the tool 31 is located in a position corresponding to the blind spot formed by the second monitoring area, there is a possibility that the user may be hurt by the dangerous portion.

In FIG. 4B, in addition to the configuration of FIG. 4A, the first sensor 32 is arranged between the second sensor 33 and the tool 31. The first sensor 32 sets the first monitoring area to include the area in the vicinity of the installation location of the second sensor 33 and detects intrusion of an object into the first monitoring area. In FIG. 4B, since the first monitoring area monitored by the first sensor 32 includes the blind spot of the second monitoring area, it can be avoided that the user is unaware that they have entered the position corresponding to the blind spot and gets hurt.

As described above, in the robot system 1 according to the present embodiment, by using the first sensor that detects intrusion of an object into the first monitoring area set around the movable mechanical part 30, processing corresponding to the operating mode of the movable mechanical part 30 can be performed. Specifically, in the case where the operating mode of the movable mechanical part 30 is the first mode, when the intrusion of the object into the first monitoring area is detected, the operation of the movable mechanical part 30 is decelerated or stopped. On the other hand, in the case where the operating mode of the movable mechanical part 30 is the second mode, when the first sensor 32 detects the contact of the user with the movable mechanical part 30, the teaching content can be accepted and executed. Accordingly, in the case of registering the teaching content, the user's operation such as a button operation or the like is not required, and workability in the teaching work is improved. Therefore, an effect is achieved that a robot system with improved safety and workability can be provided.

### [Modifications]

In the first embodiment, the ranges of the first monitoring area and the second monitoring area may be changeable. For example, in the case where the movable mechanical part 30 operates quickly, the first monitoring area and the second monitoring area may be set wide; in the case where the movable mechanical part 30 operates slowly, the first monitoring area and the second monitoring area may be set narrow. In other words, the control part 40 may change the ranges of the first monitoring area and the second monitoring area according to an assumed magnitude of the impact when the movable mechanical part 30 collides with the user or the like.

In the first embodiment, the second sensor 33 may be any type of sensor if it is capable of detecting the intrusion of an object into the second monitoring area set to include the area farther from the movable mechanical part 30 than the first monitoring area. For example, the first sensor 32 and the second sensor 33 may be sensors operating with the same detection method, or may be sensors operating with different detection methods from each other. In the case where the first sensor 32 and the second sensor 33 are sensors operating with different detection methods from each other, for example, a sensor having a detection method suitable for detecting the first monitoring area may be used as the first sensor 32, and a sensor having a detection method suitable for detecting the second monitoring area may be used as the second sensor 33.

### [Conclusion]

A robot system (1) according to a first aspect of the disclosure includes: a movable machine control part (41), controlling operation of a movable mechanical part (30) according to a set operating mode; a teaching content registration part (42), registering teaching content input by a user by applying an operating force to the movable mechanical part; a first sensor (32), detecting intrusion of an object into a first monitoring area set around the movable mechanical part and contact of the user with the movable mechanical part; and an operating mode switch part (43), switching the operating mode between a first mode in which the operation of the movable mechanical part is decelerated or stopped when the first sensor detects the intrusion of the object into the first monitoring area and a second mode in which the teaching content can be accepted and executed while the first sensor is detecting the contact of the user with the movable mechanical part.

According to the above configuration, in the robot system, in the case where, for example, the movable mechanical part is operating in the first mode, an impact received by the user entering the first monitoring area in collision with the movable mechanical part can be suppressed and safety can be improved. Furthermore, in the robot system, in the case where the movable mechanical part is standing by in the second mode, the teaching content input by the user in contact with the movable mechanical part can be registered. Accordingly, in the case of registering the teaching content, the user's operation such as a button operation or the like is not required, and workability in the teaching work is improved. Therefore, the effect is achieved that a robot system with improved safety and workability can be provided.

In the robot system (1) according to a second aspect of the disclosure, in the first aspect, the first sensor (32) may be a capacitive sensor.

According to the above configuration, the intrusion of an object into the first monitoring area is detected by the capacitive sensor. Since the capacitive sensor is capable of monitoring an area in the vicinity of an installation location without missing any blind spots, by installing the capacitive sensor in the vicinity of the movable mechanical part, the intrusion of the object into the first monitoring area can be accurately detected. Thus, safe detection in the first mode and reception of the teaching work in the second mode can be properly performed.

In the robot system (1) according to a third aspect of the disclosure, in the first or second aspect, a second sensor (33) is further included which detects intrusion of an object into a second monitoring area including an area farther from the movable mechanical part (30) than the first monitoring area. In the first mode, when the first sensor (32) detects the intrusion of the object into the first monitoring area or when the second sensor detects the intrusion of the object into the second monitoring area, the movable machine control part (41) decelerates or stops the operation of the movable mechanical part; in the second mode, the detection of intrusion of an object into the second monitoring area by the second sensor is invalidated, and while the first sensor is detecting the contact of the user with the movable mechanical part, the teaching content registration part (42) may be in a state capable of accepting and executing the teaching content.

According to the above configuration, in the first mode, since the detection of intrusion of an object is performed in both the first monitoring area and the second monitoring area, safe monitoring in a wide range can be performed. In addition, in the second mode, the second monitoring area far from the movable mechanical part is set invalid, and by the first monitoring area close to the movable mechanical part, the teaching content can be accepted and executed. That is, in the second mode, it is possible to prevent a state in which the teaching content is accepted and executed more than necessary.

In the robot system (1) according to a fourth aspect of the disclosure, in the third aspect, the first sensor (32) and the second sensor (33) may be sensors operating with different detection methods from each other.

According to the above configuration, sensors operating with different detection methods from each other are used by means of the first sensor and the second sensor. Thus, a sensor having a detection method suitable for detecting the first monitoring area can be used as the first sensor, and a sensor having a detection method suitable for detecting the second monitoring area can be used as the second sensor.

### [Implementation Example by Software]

A control block (the movable machine control part 41, the teaching content registration part 42, and the operating mode switch part 43) of the robot system 1 may be implemented by a logic circuit (hardware) formed in an integrated circuit (IC chip) or the like, or may be implemented by software.

In the latter case, the robot system 1 includes a computer executing instructions of a program being software that realizes each function. This computer includes, for example, one or more processors, and includes a computer-readable recording medium storing the above program. In the computer, the disclosure is achieved by the processor reading the program from the recording medium and executing the program. As the processor, a central processing unit (CPU), for example, can be used. As the recording medium, a "non-transitory tangible medium," for example, in addition to a read only memory (ROM), a tape, a disk, a card, a semiconductor memory, a programmable logic circuit or the like, can be used. In addition, a random access memory (RAM) or the like for developing the above program may further be included. In addition, the program may be supplied to the computer via an arbitrary transmission medium (communication network or broadcast wave, etc.) capable of transmitting the program. An aspect of the disclosure can also be implemented in the form of a data signal embedded in a carrier wave, the data signal being embodied by the above program by electronic transmission.

### [Description of Reference Numerals]

1: robot system
30: movable mechanical part
32: first sensor (first sensor)
33: second sensor (second sensor)
41: movable machine control part
43: operating mode switch part

## Claims

1. A robot system (1), comprising:
a movable machine control part (41), controlling operation of a movable mechanical part (30) according to an operating mode which is set;
a teaching content registration part (42), registering teaching content input by a user by applying an operating force to the movable mechanical part (30);
a first sensor (32), detecting contact of the user with the movable mechanical part (30); **characterised in that** the first sensor (32) detects intrusion of an object into a first monitoring area set around the movable mechanical part (30); and **in that** the robot system (1) further comprises
an operating mode switch part (43), switching the operating mode between a first mode and a second mode, wherein the operation of the movable mechanical part (30) is decelerated or stopped when the first sensor (32) detects the intrusion of the object into the first monitoring area in the first mode, and the teaching content can be accepted and executed while the first sensor (32) is detecting the contact of the user with the movable mechanical part (30) in the second mode.

2. The robot system (1) of claim 1, wherein the first sensor (32) is a capacitive sensor.

3. The robot system (1) of claim 1 or 2, further comprising a second sensor (33) detecting intrusion of an object into a second monitoring area comprising an area farther from the movable mechanical part (30) than the first monitoring area, wherein
in the first mode, when the first sensor (32) detects the intrusion of the object into the first monitoring area or when the second sensor (33) detects the intrusion of the object into the second monitoring area, the movable machine control part (41) decelerates or stops the operation of the movable mechanical part (30); and
in the second mode, the detection of intrusion of the object into the second monitoring area by the second sensor (33) is invalidated, and while the first sensor (32) is detecting the contact of the user with the movable mechanical part (30), the teaching content registration part (42) is in a state capable of accepting and executing the teaching content.

4. The robot system (1) of claim 3, wherein the first sensor (32) and the second sensor (33) are sensors operating with different detection methods from each other.

## Patentansprüche

1. Robotersystem (1), umfassend:
ein bewegliches Maschinensteuerungsteil (41), das den Betrieb eines beweglichen mechanischen Teils (30) gemäß einer eingestellten Betriebsart steuert;
ein Lehrinhaltsregistrierungsteil (42), das die Eingabe eines Lehrinhalts durch einen Benutzer durch Aufbringen einer Betätigungskraft auf das bewegliche mechanische Teil (30) registriert;
einen ersten Sensor (32), der einen Kontakt des Benutzers mit dem beweglichen mechanischen Teil (30) erfasst; **dadurch gekennzeichnet, dass** der erste Sensor (32) das Eindringen eines Objekts in einen ersten Überwachungsbereich erfasst, der um das bewegliche mechanische Teil (30) herum festgelegt ist; und dass das Robotersystem (1) ferner umfasst:
ein Betriebsmodus-Schaltteil (43), das den Betriebsmodus zwischen einem ersten Modus und einem zweiten Modus umschaltet, wobei der Betrieb des beweglichen mechanischen Teils (30) verlangsamt oder angehalten wird, wenn der erste Sensor (32) das Eindringen des Objekts in den ersten Überwachungsbereich im ersten Modus erfasst, und wobei der Lehrinhalt akzeptiert und ausgeführt werden kann, während der erste Sensor (32) den Kontakt des Benutzers mit dem beweglichen mechanischen Teil (30) in dem zweiten Modus erfasst.

2. Robotersystem (1) nach Anspruch 1, wobei der erste Sensor (32) ein kapazitiver Sensor ist.

3. Robotersystem (1) nach Anspruch 1 oder 2, ferner umfassend einen zweiten Sensor (33), der das Eindringen eines Objekts in einen zweiten Überwachungsbereich erfasst, der einen Bereich umfasst, der weiter von dem beweglichen mechanischen Teil (30) entfernt ist als der erste Überwachungsbereich, wobei
in dem ersten Betriebsmodus, wenn der erste Sensor (32) das Eindringen des Objekts in den ersten Überwachungsbereich detektiert oder wenn der zweite Sensor (33) das Eindringen des Objekts in den zweiten Überwachungsbereich detektiert, das bewegliche Maschinensteuerungsteil (41) den Betrieb des beweglichen mechanischen Teils (30) verlangsamt oder anhält; und
in dem zweiten Betriebmodus die Erfassung des Eindringens des Objekts in den zweiten Überwachungsbereich durch den zweiten Sensor (33) ungültig gemacht wird, und während der erste Sensor (32) den Kontakt des Benutzers mit dem beweglichen mechanischen Teil (30) erfasst, sich das Lehrinhaltsregistrierungsteil (42) in einem Zustand befindet, der geeignet ist, den Lehrinhalt zu akzeptieren und auszuführen.

4. Robotersystem (1) nach Anspruch 3, wobei der erste Sensor (32) und der zweite Sensor (33) Sensoren sind, die mit voneinander verschiedenen Erfassungsmethoden arbeiten.

## Revendications

1. Un système de robot (1), comprenant :
une partie mobile de commande de machine (41), commandant le fonctionnement d'une partie mécanique mobile (30) selon un mode de fonctionnement qui est fixé;
une partie d'enregistrement du contenu de l'enseignement (42), enregistrant le contenu pédagogique saisi par un utilisateur en appliquant une force de commande à la partie mécanique mobile (30);
un premier capteur (32) détectant le contact de l'utilisateur avec la pièce mécanique mobile (30);
**caractérisé en ce que** le premier capteur (32) détecte l'intrusion d'un objet dans une première zone de surveillance établie autour de la partie mécanique mobile (30) ; et **en ce que** le système de robot (1) comprend en outre:
une partie de commutation de mode de fonctionnement (43), commutant le mode de fonctionnement entre un premier mode et un second mode, dans lequel le fonctionnement de la partie mécanique mobile (30) est ralenti ou arrêté lorsque le premier capteur (32) détecte l'intrusion de l'objet dans la première zone de surveillance dans le premier mode, et le contenu de l'enseignement peut être accepté et exécuté pendant que le premier capteur (32) détecte le contact de l'utilisateur avec la partie mécanique mobile (30) dans le second mode.

2. Le système de robot (1) selon la revendication 1, dans lequel le premier capteur (32) est un capteur capacitif.

3. Le système de robot (1) selon la revendication 1 ou 2, comprenant en outre un second capteur (33) détectant l'intrusion d'un objet dans une seconde zone de surveillance comprenant une zone plus éloignée de la partie mécanique mobile (30) que la première zone de surveillance, dans lequel
dans le premier mode, lorsque le premier capteur (32) détecte l'intrusion de l'objet dans la première zone de surveillance ou lorsque le second capteur (33) détecte l'intrusion de l'objet dans la seconde zone de surveillance, la partie mobile de commande de la machine (41) ralentit ou arrête le fonctionnement de la partie mécanique mobile (30); et
dans le second mode, la détection de l'intrusion de l'objet dans la seconde zone de surveillance par le second capteur (33) est invalidée, et tandis que le premier capteur (32) détecte le contact de l'utilisateur avec la partie mécanique mobile (30), la partie d'enregistrement du contenu de l'enseignement (42) est dans un état capable d'accepter et d'exécuter le contenu de l'enseignement.

4. Le Système de robot (1) selon la revendication 3, dans lequel le premier capteur (32) et le second capteur (33) sont des capteurs fonctionnant avec des méthodes de détection différentes l'un de l'autre.
